Europäisches Patentamt

European Patent Office

Office européen des brevets

(11) Publication number: **0 335 657**
**A1**

# (12) EUROPEAN PATENT APPLICATION

(21) Application number: 89303047.8

(22) Date of filing: 28.03.89

(51) Int. Cl.⁴: **A 47 J 47/00**

(30) Priority: 26.03.88 GB 8807278

(43) Date of publication of application:
04.10.89 Bulletin 89/40

(84) Designated Contracting States:
DE ES FR GB IT NL

(71) Applicant: **SELECT PLASTICS LIMITED**
**Unit D1 Treforest Industrial Estate Pontypridd**
**Mid-Glamorgan CF37 5UT Wales (GB)**

(72) Inventor: **Holland, John Sinclair**
**26 Wentwood View, Caldicot**
**Newport, Gwent (GB)**

(74) Representative: **James, Michael John Gwynne et al**
**Wynne-Jones, Lainé & James Morgan Arcade Chambers**
**33, St. Mary Street**
**Cardiff Clamorgan CF1 2AB (GB)**

(54) Improvements relating to chopping boards.

(57) A food chopping board is provided with one portion (3) defining a planar surface on which food can be prepared, whilst an adjacent portion is formed as a downwardly extending bowl (2) provided with a perforated base (7). The underneath surface of the planar portion (1) is flat so that it can be laid on an existing worktop surface. Grooves (4) in the surface (3) provide for the run off of liquids into the bowl (2). Rim portions (5) define an outlet gap (6) for directing prepared foodstuffs which are being swept off into a container.

Fig.1.

EP 0 335 657 A1

## Description

### Improvements relating to Food Chopping Boards

This invention aims to provide a food chopping board of a design which is particularly useful in the kitchen for the purpose of processing foods. Various food materials which are being processed may require an initial removal of unwanted portions (peeling, etc.) prior to being chopped into a state suitable for cooking or display.

According to this invention there is provided a food chopping board comprising a generally planar portion leading into a bowl portion which extends downwardly substantially at right angles to the planar portion, the planar portion having a generally flattened upper face whose edge partly defines the opening of the bowl portion and a lower face which may be laid on an existing flat surface so that the upper face will lie parallel to that flat surface.

This form of chopping board can readily be supported on an existing kitchen worktop with the bowl portion projecting to one side of the work top or, for example, into a kitchen sink. Any unwanted material removed from foodstuffs being prepared on the chopping board can be swept into the bowl portion whilst the finally prepared and chopped material can be swept off the other side of the board into a cooking utensil, preparation dish, or the like. Preferably part of the edge of the upper surface of the planar portion leading from the opening of the bowl will have an upstanding rim which does not extend over a portion of the edge generally opposite to the region where the bowl portion is defined. The gap in the rim will provide a region where the prepared food may be swept off into a container whilst the upstanding rim portions will provide a lead-in to that gap.

In the preferred arrangement the lower face of the planar portion defines a downwardly projecting support ridge which will support the board on an existing surface. Ideally, this support ridge will incorporate a natural or synthetic rubber or other material providing for a friction grip of the board on an existing flat surface, which will prevent the board from sliding over the existing flat surface. The support ridge is preferably defined to lie parallel to the edge of the planar portion.

The bowl portion of the board will ideally be provided with a perforated base so that liquids will drain off and so that raw materials can be washed and drained at the same time within the bowl portion.

Advantageously the bowl portion and the planar portion will, between them, define a circular or rectilinear body in plane view, and the bowl portion can then be of generally oval or rectangular cross-section.

The invention further extends to a chopping board as hereinbefore defined in combination with a support bowl onto which the board can be mounted, with the bowl portion of the board within the support bowl.

This support bowl can provide a means of storage of materials to be processed and/or a receiver for waste material or washing water. Preferably the support bowl will be divided by an inner wall into two separate portions, one only of which has a perforated base. Ideally, the top edge of the inner wall will have a notch therein allowing water to flow between the two portions of the support bowl, so that if the portion without the perforated base comes over-full with liquid, this will spill over into the perforated section for drainage into a sink or the like.

The invention may be performed in various ways and a preferred embodiment thereof will now be described with reference to the accompanying drawings, in which:-

Figures 1 and 2 are plan and underneath views of a chopping board constructed in accordance with this invention;

Figure 3 is a vertical cross-section through the board shown in Figures 1 and 2;

Figures 4 and 5 are plan and underneath views of a support bowl to be used with the chopping board of Figures 1 to 3; and

Figure 6 illustrates the chopping board and support bowl as a combination.

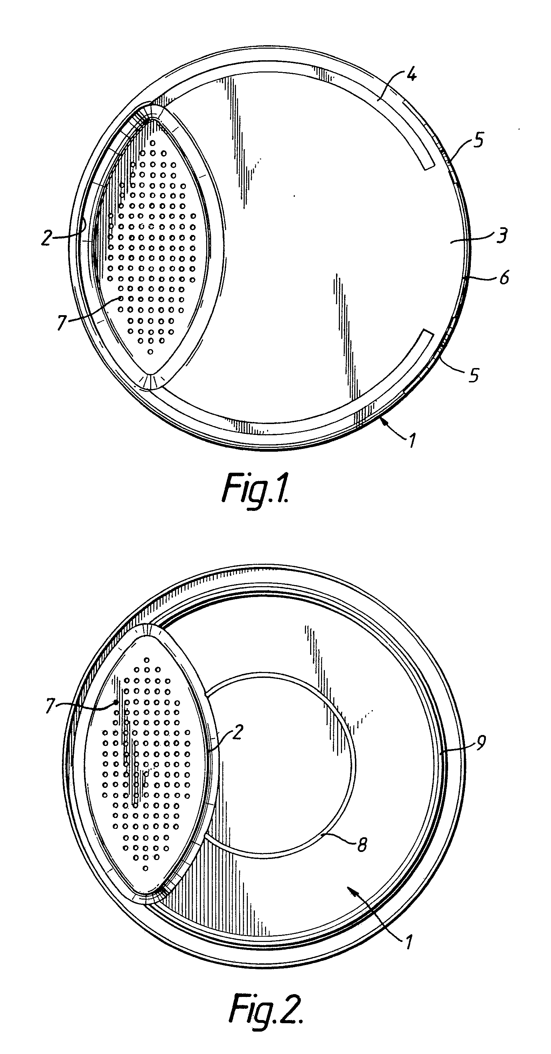

The chopping board illustrated in Figures 1 to 3 is formed from a planar portion 1 and a bowl portion 2. The planar portion 1 has a generally flat top surface 3 but with an outer groove 4 which will allow run-off of liquids into the bowl portion 2. Rim portions 5 define an outlet gap 6 whereby chopped foodstuffs may be swept off into a saucepan or other container. The bowl portion 2 is provided with a perforated base 7 for the run-off of liquids or to enable foodstuffs to be washed and drained prior to further processing. The underneath of the planar portion 1 is formed with a pair of curved support ridges 8 and 9, the outermost one incorporating a strip of rubber or synthetic material which will reduce the tendency for the chopping board to slip when placed on an existing flat surface.

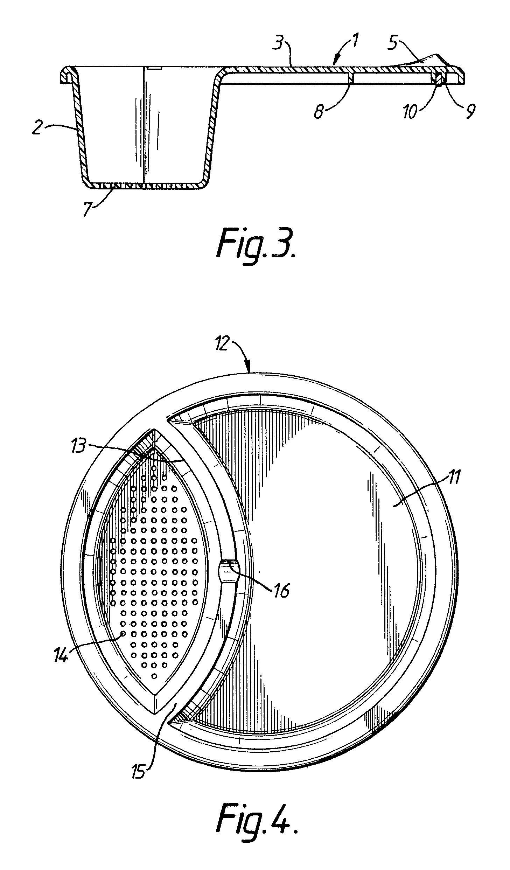

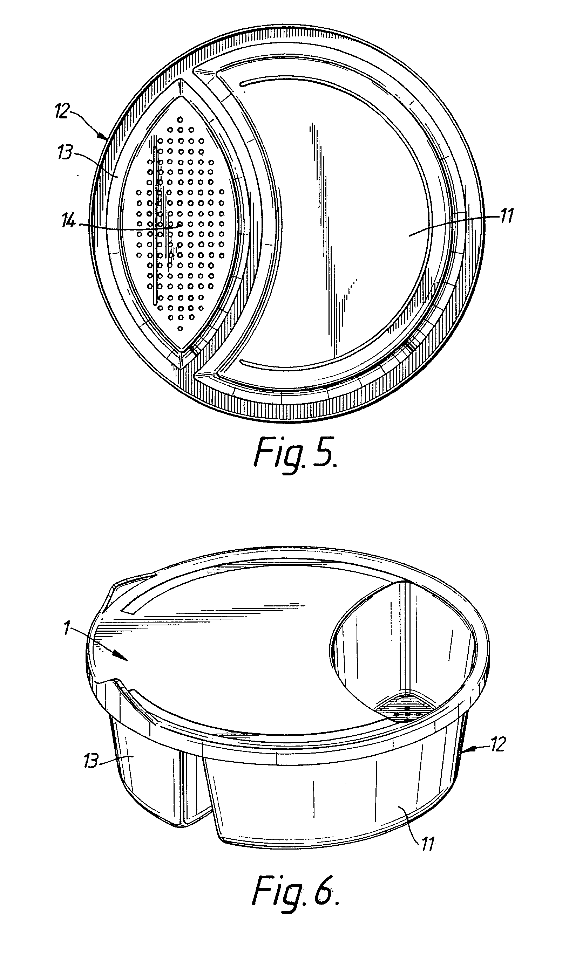

The chopping board can be used in one of two ways. Firstly, it can, for example, be positioned on an existing worktop, preferably with the bowl portion 2, projecting down into a sink, and foodstuffs can then be prepared on the flat surface 3 of the planar portion 1. Alternatively, the bowl portion 2 of the chopping board may be nested within the larger section 11 of a two- section support bowl 12, as illustrated in Figures 4 and 5. The smaller section 13 of the support bowl 12 has a perforated base 14 and the dividing wall 15 between the two sections has a notch 16 to allow liquids within the section 11 to run off into the section 13. When the chopping board and support bowl are used in combination, as illustrated in Figure 6, the main section 11 of the support bowl 12 can provide storage for materials to be processed on the top surface 3 of the chopping board and any juices or other liquids which might run off into the perforated bowl portion 2 will be received within the closed section 11 of the support bowl 12. This enables the chopping board to be used at places remote from an existing work surface and kitchen sink.

Whilst the chopping board and the support bowl have been illustrated in circular form, it will be appreciated that these items could be of other cross-sectional shapes, particularly rectangular.

**Claims**

1. A food chopping board comprising a generally planar portion leading into a bowl portion which extends downwardly substantially at right angles to the planar portion, the planar portion having a generally flattened upper face whose edge partly defines the opening of the bowl portion and a lower face which may be laid on an existing flat surface so that the upper face will lie parallel to that flat surface.

2. A board according to claim 1, wherein part of the edge of the upper surface leading from the opening of the bowl has an upstanding rim which does not extend over a portion of the edge generally opposite to the region where the bowl portion is defined.

3. A board according to claim 1 or claim 2, wherein the lower face of the planar portion defines a downwardly projecting support ridge which will support the board on an existing surface, with the support ridge preferably being defined to lie parallel to the edge of the planar portion.

4. A board according to claim 3, wherein the support ridge incorporates a natural or synthetic rubber or other material providing for a friction grip of the board on an existing flat surface.

5. A board according to any one of claims 1 to 4, wherein the bowl portion has a perforated base.

6. A board according to any one of claims 1 to 5, wherein the bowl portion and the planar portion between them define a circular or rectilinear body in plan view.

7. A board according to any one of claims 1 to 6, wherein the bowl portion is of generally oval or rectangular cross-section.

8. A chopping board according to any one of claims 1 to 7, in combination with a support bowl onto which the board can be mounted, with the bowl portion of the board within the support bowl.

9. A combination according to claim 8, wherein the support bowl is divided by an inner wall into two separate portions, one only of which has a perforated base.

10. A combination according to claim 9, wherein the top edge of the inner wall has a notch therein allowing water to flow between the two portions of the support bowl.

*Fig.1.*

*Fig.2.*

Fig.3.

Fig.4.

Fig. 5.

Fig. 6.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| X | DE-A-2904504 (LEIFHEIT) <br> * the whole document * | 1, 5, 7 | A47J47/00 |
| X | DE-U-7719191 (EWIG) <br> * the whole document * | 1, 5 | |
| X | GB-A-2074846 (DART IND. INC.) <br> * the whole document * | 1 | |
| X | US-A-4653737 (HASKINS) <br> * the whole document * | 1, 8, 9 | |
| X | US-A-2963957 (TASHMAN) <br> * figures 1-4 * | 1, 7 | |
| A | DE-U-8604332 (KANDLER) <br> * the whole document * | 1, 4 | |
| A | GB-A-529268 (LITTLE) <br> * page 2, line 31 - line 38; figure 1 * | 4 | **TECHNICAL FIELDS SEARCHED (Int. Cl.4 )** |
| A | DE-A-3516846 (WEIDT) <br> * figures 1-4 * | 8 | A47J |

The present search report has been drawn up for all claims

| Place of search | Date of completion of the search | Examiner |
|---|---|---|
| THE HAGUE | 03 JULY 1989 | SCHARTZ J. |